(19) **Europäisches Patentamt / European Patent Office / Office européen des brevets**

(11) **EP 4 640 887 A1**

(12) **EUROPEAN PATENT APPLICATION**
published in accordance with Art. 153(4) EPC

(43) Date of publication:
**29.10.2025 Bulletin 2025/44**

(21) Application number: **23907504.7**

(22) Date of filing: **04.12.2023**

(51) International Patent Classification (IPC):
**C22C 38/10** (2006.01)    **C22C 38/04** (2006.01)
**C22C 38/02** (2006.01)    **C21D 8/02** (2006.01)
**B21C 47/02** (2006.01)    **C21D 9/46** (2006.01)
**B23K 9/29** (2006.01)

(52) Cooperative Patent Classification (CPC):
**B21C 47/02; B23K 9/29; C21D 8/02; C21D 9/46;
C22C 38/02; C22C 38/04; C22C 38/10**

(86) International application number:
**PCT/KR2023/019804**

(87) International publication number:
**WO 2024/136218 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181045**

(71) Applicant: **POSCO Co., Ltd
Pohang-si, Gyeongsangbuk-do 37859 (KR)**

(72) Inventors:
• **YANG, Hong-Seok
Pohang-si Gyeongsangbuk-do 37859 (KR)**

• **NOH, Min-Gyu
Pohang-si Gyeongsangbuk-do 37859 (KR)**
• **CHO, Jung-Hae
Pohang-si Gyeongsangbuk-do 37859 (KR)**
• **HA, Jun-Hyuk
Pohang-si Gyeongsangbuk-do 37859 (KR)**
• **KIM, Hyeon-Woo
Pohang-si Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **HOT-ROLLED STEEL SHEET FOR TUBE OF HYPER TUBE TRAIN AND METHOD FOR PRODUCING SAME**

(57) The present disclosure relates to a hot-rolled steel sheet for a tube of a hyper tube train and a method for producing same, the steel sheet having excellent yield strength, vibration damping ratio, weldability, and weld site-low temperature toughness. The hot-rolled steel sheet for a tube of a hyper tube train according to the present disclosure comprises, in weight%, carbon (C): 0.03-0.11%, silicon (Si): 0.3-1.5%, cobalt (Co): 1-3%, manganese (Mn): 1.2-2.2%, and the balance being Fe and inevitable impurities, and having, as a final microstructure, a composite structure including ferrite and pearlite.

EP 4 640 887 A1

**Description**

**FIELD**

The present disclosure relates to a hot-rolled steel sheet for a tube of a vacuum tube train and a method for manufacturing the same. More specifically, the present disclosure relates to a hot-rolled steel sheet for a tube of a vacuum tube train that has excellent yield strength, vibration damping ratio, weldability, and low temperature toughness of a welded portion, and thus has physical properties suitable for use in the tube of the vacuum tube train, and a method for manufacturing the same.

**DESCRIPTION OF RELATED ART**

A vacuum tube train system, also known as a hyper tube train system, is a system in which a magnetic levitation train moves inside a vacuum tube. A vacuum tube train may operate at a superhigh speed because there is no friction with air or a track, which is a main cause of energy loss when the train travels. Such a vacuum tube train is attracting attention as an eco-friendly next-generation transportation because it may save 93% or more of energy compared to aircraft because of the low energy loss, and accordingly, active research is being conducted around the world.

A structure and a material of the vacuum tube used in the superhigh-speed vacuum tube train affect a performance or a cost of the system. Currently, there are three main materials studied as the tube materials for the vacuum tube train.

One of the tube materials of the vacuum tube train is concrete. A vacuum tube made of concrete is advantageous in terms of cost, but it is not easy to bond individual tubes of about 10m to each other. In addition, when vacuum is implemented, because of pores inside concrete, there is a disadvantage in that a degree of vacuum is easily lowered as external gas enters the tube.

Another of the tube materials that have been studied a lot is a composite material such as carbon fiber. The composite material such as the carbon fiber is light and has high performance, but high cost is required.

Therefore, currently the most likely material for the tube of the vacuum tube train is steel. Steel is a material that may be mass-produced at a low cost. Steel has high rigidity and strength, and is a material that is easy to process. In addition, it is a material that allows for easy assembly or welding of the vacuum tubes or between the vacuum tube and an accessory, and is a material that also has an appropriate outgassing rate when maintaining the vacuum.

Because the ultrahigh-speed vacuum tube train operates at a significantly higher speed than a current high-speed train, safety of passengers and surrounding facilities should be considered as a top priority. Therefore, there is an urgent need to develop a material for the tube of the vacuum tube train, which has processability and degassing rate suitable for the use in the tube of the vacuum tube train and is able to ensure the safety.

Related prior literature is Korean Patent Application Publication No. 10-2009-0086232 (published on 11.08.2009), and the document describes a member with excellent damping ability, a method for manufacturing the same, and a steel sheet used as the member with the excellent damping ability.

**DISCLOSURE**

**TECHNICAL PURPOSE**

The present disclosure is to provide a hot-rolled steel sheet for a tube of a vacuum tube train that has excellent yield strength, vibration damping ratio, weldability, and low temperature toughness of a welded portion and thus has physical properties suitable for use in the tube of the vacuum tube train tube, and a method for manufacturing the same.

Purposes of the present disclosure are not limited to the above-described contents. Those skilled in the art will have no difficulty in understanding additional purposes of the present disclosure from the overall contents of the present document.

**TECHNICAL SOLUTION**

A hot-rolled steel sheet for a tube of a vacuum tube train according to an embodiment of the present disclosure for achieving the above-described purposes includes, in wt%, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities, a final microstructure has a composite structure including ferrite and perlite, and the hot-rolled steel sheet satisfies following Relational Expressions 1 and 2:

[Relational Expression 1]

$$355 \leq (11+394 \times D^{-0.5})+(448 \times [C])+(94 \times [Si])+(36.5 \times [Co])+(69 \times [Mn])+(3,429 \times [Nb])$$

[Relational Expression 2]

$$150 \leq (186-210 \times D^{-0.5})-(121 \times [C])+(13.2 \times [Si])+(31.1 \times [Co])-(13.7 \times [Mn])-(4,723 \times [Nb])$$

(wherein in the Relational Expressions 1 and 2, D denotes an average crystal grain size of ferrite of the hot-rolled steel sheet, and [ ] denotes weight % of each element).

The hot-rolled steel sheet may have the final microstructure composed of 60 to 95% ferrite, 5 to 40% perlite, and other inevitable structures.

Said other inevitable structures may include a low temperature structure of at least one of bainite and martensite, and the low temperature structure may have an area percentage equal to or smaller than 5%.

The average crystal grain size of the ferrite may be 7 to 15 $\mu$m.

The hot-rolled steel sheet may have a yield strength (YS) equal to or greater than 350MPa and a Charpy impact energy equal to or greater than 50J at -20°C.

The hot-rolled steel sheet may have a vibration damping ratio equal to or greater than $150 \times 10^{-6}$ measured for a frequency of 1,650Hz in a flexural vibration mode.

In a welded portion formed by welding the hot-rolled steel sheet by submerged arc welding, a Charpy impact energy at -20°C of the welded portion may be equal to or greater than 50J and a fraction of M-A phases included in the welded portion may be equal to or smaller than 5% in an area percentage.

A thickness of the hot-rolled steel sheet may be equal to or greater than 10mm.

A method for manufacturing a hot-rolled steel sheet for a tube of a vacuum tube train according to an embodiment of the present disclosure for achieving the above-described purposes includes reheating a steel slab including, in wt%, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities at 1,100°C to 1,300°C, hot-rolling the reheated steel slab, and cooling the hot-rolled steel sheet that has undergone the hot rolling to 600 to 700°C and coiling the cooled steel sheet, a final microstructure of the hot-rolled steel sheet has a composite structure including ferrite and perlite, and the hot-rolled steel sheet satisfies following Relational Expressions 1 and 2:

[Relational Expression 1]

$$355 \leq (11+394 \times D^{-0.5})+(448 \times [C])+(94 \times [Si])+(36.5 \times [Co])+(69 \times [Mn])+(3,429 \times [Nb])$$

[Relational Expression 2]

$$150 \leq (186-210 \times D^{-0.5})-(121 \times [C])+(13.2 \times [Si])+(31.1 \times [Co])-(13.7 \times [Mn])-(4,723 \times [Nb])$$

(wherein in the Relational Expressions 1 and 2, D denotes an average crystal grain size of ferrite of the hot-rolled steel sheet, and [ ] denotes weight % of each element).

The hot rolling may be performed at a finishing delivery temperature of 860°C to 960°C.

The hot-rolled steel sheet may have the final microstructure composed of 60 to 95% ferrite, 5 to 40% perlite, and other inevitable structures.

Said other inevitable structures may include a low temperature structure of at least one of bainite and martensite, and the low temperature structure may have an area percentage equal to or smaller than 5%.

The average crystal grain size of the ferrite may be 7 to 15 $\mu$m.

The hot-rolled steel sheet may have a yield strength (YS) equal to or greater than 350MPa and a Charpy impact energy equal to or greater than 50J at -20°C.

The hot-rolled steel sheet may have a vibration damping ratio equal to or greater than $150 \times 10^{-6}$ measured for a frequency of 1,650Hz in a flexural vibration mode.

In a welded portion formed by welding the hot-rolled steel sheet by submerged arc welding, a Charpy impact energy at -20°C of the welded portion may be equal to or greater than 50J and a fraction of M-A phases included in the welded portion may be equal to or smaller than 5% in an area percentage.

A thickness of the hot-rolled steel sheet may be equal to or greater than 10mm.

**TECHNICAL EFFECT**

The hot rolled steel sheet for the tube of the vacuum tube train and the method for manufacturing the same according to the present disclosure not only have the yield strength equal to or greater than 350MPa and the Charpy impact energy equal to or greater than 50J at -20°C, but also have the vibration damping ratio equal to or greater than $150 \times 10^{-6}$ measured for the frequency of 1,650Hz in the flexural vibration mode by preparing the specimen having the length, the width, and the thickness of $80 \times 20 \times 2$mm.

In addition, the hot-rolled steel sheet for the tube of the vacuum tube train and the method for manufacturing the same according to the present disclosure have the Charpy impact energy equal to or greater than 50J at -20°C of the welded portion when the hot-rolled steel sheet is welded by the submerged arc welding, and have the fraction of the M-A phases included in the welded portion equal to or smaller than 5% in the area percentage.

As a result, the hot-rolled steel sheet for the tube of the vacuum tube train and the method for manufacturing the same according to the present disclosure have the excellent yield strength, vibration damping ratio, weldability, and low temperature toughness of the welded portion, and thus have the physical properties suitable for the use in the tube of the vacuum tube train.

Effects of the present disclosure may not be limited to the above-described matters, and may be interpreted as including matters that may be reasonably inferred by a person with ordinary skills in the art from the matters described in the present document.

**DETAILED DESCRIPTIONS**

Advantages and features of the present disclosure and methods for achieving the same will become apparent with reference to embodiments described in detail below. However, the present disclosure is not limited to the embodiments disclosed below, but will be implemented in various different forms. The present embodiments are provided to make the disclosure of the present disclosure complete and to fully inform those skilled in the art to which the present disclosure belongs of the scope of the invention, and the present disclosure is only defined by the scope of the claims. The same reference numerals refer to the same elements throughout the present document.

Hereinafter, a hot-rolled steel sheet for a tube of a vacuum tube train and a method for manufacturing the same according to a preferred embodiment of the present disclosure will be described in detail as follows.

**Hot-rolled steel sheet for tube of vacuum tube train**

The vacuum tube train is a train that runs through a tube in a vacuum or subvacuum state, and is a next-generation means of transportation currently in an early stage of development. The vacuum tube train is a transportation means that may effectively achieve high speed and high efficiency by removing frictional resistance between wheels and a track and minimizing air resistance.

However, because of a nature of the vacuum tube train operating at a superhigh speed, when safety of the vacuum tube train is not sufficiently secured, there is a risk of a major accident. In particular, not only when the vacuum tube is structurally damaged or collapsed, but also when deformation occurs in a partial shape of the tube, a great disaster may be caused. Therefore, a material for the tube of the vacuum tube train requires more stringent safety.

As a result of in-depth research, the inventors of the present invention found that following physical properties are important for the material for the vacuum tube to secure the safety of the vacuum tube train.

A first physical property required for the material for the tube of the vacuum tube train is a high strength property. Because the vacuum tube train moves through the vacuum tube, the material for the vacuum tube is required to have sufficient strength as a structure. In addition, because the inside of the vacuum tube should be maintained in the vacuum or subvacuum state, it is required to have the sufficient high strength property such that the shape of the vacuum tube is not deformed by a pressure difference between the inside and outside.

A second property required for the material for the vacuum tube is a vibration damping ability. In the vacuum tube train, a pod with several or dozens of people on board passes through the vacuum tube at an interval of tens of seconds to minutes. When a preceding pod passes and then a following pod passes, vibration may be amplified in the vacuum tube to cause resonance, and in severe cases, damage to the vacuum tube may be caused.

Therefore, when a material having a vibration damping ratio of a predetermined level or higher is applied to the vacuum tube, the vibration in the vacuum tube after the preceding pod passes may be effectively reduced, which may, as a result, effectively contribute to the safety of the vacuum tube train.

A third physical property required for the material for the vacuum tube is low temperature toughness. The vacuum tube train may also operate in a polar region or a deep sea. Because a steel material tends to be more easily damaged in a low or cryogenic environment, when the steel material is applied to the vacuum tube, it is required to have a low temperature toughness at a certain level or higher to ensure the safety. In particular, because the tube for the vacuum tube train is manufactured in a form of the tube via welding, it is required to have excellent low temperature toughness not only in a base material but also in a welded portion.

Via the in-depth research, the inventors of the present invention have derived the present disclosure by recognizing that all of excellent yield strength, vibration damping ratio, weldability, and low temperature toughness of the welded portion may be achieved by strictly controlling an alloy composition of the hot-rolled steel sheet and a content ratio thereof, and a final microstructure.

To this end, the hot-rolled steel sheet for the tube of the vacuum tube train according to an embodiment of the present disclosure includes, in weight %, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities. The final microstructure has a composite structure including ferrite and perlite. Further, the hot-rolled steel sheet satisfies following Relational Expression 1 and Relational Expression 2.

[Relational Expression 1]

$$355 \leq (11+394 \times D^{-0.5})+(448 \times [C])+(94 \times [Si])+(36.5 \times [Co])+(69 \times [Mn])+(3,429 \times [Nb])$$

[Relational Expression 2]

$$150 \leq (186-210 \times D^{-0.5})-(121 \times [C])+(13.2 \times [Si])+(31.1 \times [Co])-(13.7 \times [Mn])-(4,723 \times [Nb])$$

In Relational Expressions 1 and 2 above, D means an average crystal grain size of ferrite of the hot-rolled steel sheet, and [ ] means a weight % of each element.

In addition, the hot-rolled steel sheet of the present disclosure has the final microstructure composed of, in area percentages, 60 to 95% ferrite, 5 to 40% perlite, and other inevitable structures. In this regard, it is preferable that said other inevitable structures include at least one low temperature structure of bainite and martensite, and the low temperature structure has an area percentage equal to or smaller than 5%.

In addition, it is preferable that the average crystal grain size of ferrite is 7 to 15 $\mu$m.

The hot-rolled steel sheet of the present disclosure has a yield strength (YS) equal to or greater than 350MPa and a Charpy impact energy equal to or greater than 50J at -20°C.

It is preferable that the hot-rolled steel sheet of the present disclosure has a vibration damping ratio equal to or greater than $150 \times 10^{-6}$ measured for a frequency of 1,650Hz in a flexural vibration mode.

In the welded portion formed by welding the hot-rolled steel sheet via submerged arc welding, it is preferable that the Charpy impact energy at -20°C of the welded portion is equal to or greater than 50J and a fraction of M-A phases included in the welded portion has an area percentage equal to or smaller than 5%.

A thickness of the hot-rolled steel sheet of the present disclosure may be equal to or greater than 10mm.

Hereinafter, a steel composition included in the hot-rolled steel sheet for the tube of the vacuum tube train according to an embodiment of the present disclosure and a composition ratio thereof will be described in more detail. The % representing the content of each element is based on weight, unless otherwise indicated.

Carbon (C): 0.03 to 0.11%

Carbon (C) is a component that greatly affects a strength of the steel sheet.

Such carbon (C) is preferably added in an amount of 0.03 to 0.11wt% of a total weight of the hot-rolled steel sheet according to an embodiment of the present disclosure, and as a more preferable range, 0.05 to 0.09wt% may be suggested.

When the amount of carbon (C) added is smaller than 0.03wt%, it may be difficult to secure the strength required by the structure. On the contrary, when the amount of carbon (C) added is excessive to be greater than 0.11wt%, the toughness of the material may be deteriorated, the weldability may be deteriorated, and the yield ratio may increase. In addition, when the amount of carbon (C) added is excessive to be greater than 0.11 wt%, coarsening of crystal grains may be difficult.

Silicon (Si): 0.3 to 1.5%

Silicon (Si) is an element that may increase the vibration damping ratio by increasing a magnetic hysteresis. In addition, because it is combined with oxygen in a steelmaking step to form slag, it tends to be removed together with oxygen. In addition, silicon (Si) is also a component that effectively contributes to improvement of the material strength.

Such silicon (Si) may be preferably added in an amount of 0.3 to 1.5wt% of the total weight of the hot-rolled steel sheet according to an embodiment of the present disclosure, and as a more preferable range, 0.5 to 1.0wt% may be suggested.

When the amount of silicon (Si) added is smaller than 0.3wt%, it is difficult to properly exert the above effect. On the other hand, when the amount of silicon (Si) added is excessive to be greater than 1.5wt%, it may interfere with detachment of a surface scale, thereby degrading a surface quality of a product. In addition, when the amount of silicon (Si) added is excessive to be greater than 1.5wt%, formation of the M-A phases (martensite-austenite composites) in the welded portion may be promoted, thereby deteriorating the low temperature toughness of the welded portion.

Cobalt (Co): 1.0 to 3.0%

The present disclosure maximizes a phenomenon of damping external vibration via friction generated when a magnetic domain wall moves. Accordingly, it is helpful to add an alloy element that increases the magnetic hysteresis or a magnetostrictive constant during the movement of the magnetic domain wall. Cobalt (Co) is an effective element that may improve the vibration damping ability by increasing the magnetic hysteresis while not reducing a magnetic permeability.

Accordingly, cobalt (Co) is preferably added in an amount of 1.0 to 3.0wt% of the total weight of the hot-rolled steel sheet for the tube of the vacuum tube train according to the present disclosure, and as a more preferable range, 1.5 to 2.5wt% may be suggested.

When the amount of cobalt (Co) added is smaller than 1.0wt%, because the amount of cobalt (Co) added is insignificant, the effect of improving the vacuum damping ability may not be properly exhibited. On the contrary, when the amount of cobalt (Co) added exceeds 3.0wt%, there is a high risk of an increase in cost because of an increase in the amount of cobalt added which is expensive. In addition, when a large amount of cobalt (Co) is added in excess of 3.0wt%, there may be side effects resulted from formation of precipitates, and thus it may not be preferable.

Manganese (Mn): 1.2 to 2.2%

Manganese (Mn) is a component that improves the strength and hardenability of steel.

Such manganese (Mn) may be preferably added in an amount of 1.2 to 2.2wt% of the total weight of the hot-rolled steel sheet for the tube of the vacuum tube train according to the present disclosure, and as a more preferable range, 1.5 to 2.0wt% may be suggested.

When the amount of manganese (Mn) added is smaller than 1.2wt%, it is difficult to properly exhibit the effect of improving the strength and the hardenability. On the contrary, when the amount of manganese (Mn) added is excessive to be greater than 2.2wt%, a material deviation may occur because of center segregation, and crack propagation resistance may be deteriorated. In addition, when the amount of manganese (Mn) added is excessive to be greater than 2.2wt%, the toughness of steel may be deteriorated.

Niobium (Nb), titanium (Ti), and vanadium (V) are all elements that improve the strength of the steel sheet via formation of fine carbonitride. Accordingly, to secure the strength, niobium (Nb), titanium (Ti), and vanadium (V) elements are used in many products. However, such precipitates interfere with growth of the crystal grains and the movement of the magnetic domain wall, thereby deteriorating the vibration damping ratio. Therefore, in the present disclosure, the niobium (Nb), titanium (Ti), and vanadium (V) elements are not added.

The hot-rolled steel sheet for the tube of the vacuum tube train according to an embodiment of the present disclosure may include remaining Fe and other inevitable impurities in addition to the above-described components. In a typical manufacturing process, unintended impurities may be inevitably mixed from a raw material or a surrounding environment, so that they are not able to be entirely excluded. Because such impurities may be known to anyone of ordinary skill in the art, all of them are not specifically mentioned in the present document. In addition, further addition of effective components other than the above-described components is not entirely excluded.

The hot-rolled steel sheet for the tube of the vacuum tube train according to an embodiment of the present disclosure may be composed of a composite structure including ferrite and perlite as the final microstructure. In this regard, the hot-rolled steel sheet for the tube of the vacuum tube train according to an embodiment of the present disclosure actively inhibits generation of a low temperature structure such as bainite and martensite.

Such a low temperature structure such as bainite and martensite may have high strength and low yield ratio, and thus may exhibit excellent physical properties as a structural material. However, because the hot-rolled steel sheet for the tube of the vacuum tube train that the present disclosure aims for is considerably thick to have a thickness equal to or greater than 10mm, a physical property deviation occurs in a thickness direction of the steel sheet even when the low temperature structure is introduced. Therefore, the low temperature structure is only formed on a surface of the steel sheet, and it is difficult to sufficiently generate the low temperature structure to a central portion in the thickness direction of the steel sheet. For this reason, in the present disclosure, the generation of the low temperature structure such as bainite and martensite is intentionally and actively suppressed.

Therefore, the hot-rolled steel sheet for the tube of the vacuum tube train according to an embodiment of the present disclosure constructs the microstructure of the steel sheet as a composite structure including ferrite and perlite to minimize the physical property deviation between the surface and the central portion in the thickness direction, and even though the low temperature structure such as bainite and martensite is inevitably formed, actively suppresses a fraction thereof to be equal to or smaller than 5%, more preferably equal to or smaller than 3%, and even more preferably equal to or smaller than 1% in area percentages. In terms of securing the physical properties, a fraction of ferrite may be 60 to 95% in an area percentage, and a fraction of perlite may be 5 to 40% in an area percentage.

To simultaneously secure the desired yield strength, vibration damping ratio, and low temperature toughness, the present disclosure limits the average crystal grain size of ferrite within a certain range of 7 to 15 $\mu$m. The greater the average crystal grain size of ferrite, the more advantageous it is to secure the vibration damping ratio, so that the average crystal grain size is limited to a minimum of 7 $\mu$m. On the other hand, when the average crystal grain size of ferrite is excessively great, the strength and the low temperature toughness of the material are deteriorated, and thus the average crystal grain size of ferrite is limited to a maximum of 15 $\mu$m.

The inventors of the present invention have conducted an in-depth study on a method for securing the stability of the material for the tube of the vacuum tube train, and as a result, they have derived following Relational Expressions 1 and 2 by recognizing that the yield strength, the vibration damping ratio, and the low temperature toughness of the welded portion may be simultaneously secured when the contents of carbon (C), silicon (Si), cobalt (Co), and manganese (Mn) are controlled and the average crystal grain size of ferrite is controlled to be within the predetermined range of 7 to 15 $\mu$m in a low alloy-based steel sheet such as that in the present disclosure. Relational Expressions 1 and 2 are designed by the present inventor to predict whether the yield strength is equal to or greater than 350MPa and the vibration damping ratio is equal to or greater than $150 \times 10^{-6}$ based on the alloy components and the ferrite average crystal grain size. Relational Expression 1 mainly relates to the yield strength, and Relational Expression 2 mainly relates to the vibration damping ratio measured for the frequency of 1,650Hz in the flexural vibration mode. When both Relational Expressions 1 and 2 are satisfied, it may be predicted that the yield strength of the hot-rolled steel sheet is equal to or greater than 350MPa and the vibration damping ratio thereof is equal to or greater than $150 \times 10^{-6}$. When Relational Expression 1 is not satisfied, it may be predicted that the yield strength of the hot-rolled steel sheet is smaller than 350MPa, and when Relational Expression 2 is not satisfied, it may be predicted that the vibration damping ratio of the hot-rolled steel sheet is smaller than $150 \times 10^{-6}$.

[Relational Expression 1]

$$355 \leq (11+394 \times D^{-0.5})+(448 \times [C])+(94 \times [Si])+(36.5 \times [Co])+(69 \times [Mn])+(3,429 \times [Nb])$$

[Relational Expression 2]

$$150 \leq (186-210 \times D^{-0.5})-(121 \times [C])+(13.2 \times [Si])+(31.1 \times [Co])-(13.7 \times [Mn])-(4,723 \times [Nb])$$

In Relational Expressions 1 and 2 above, D means the average crystal grain size of ferrite of the hot-rolled steel sheet, and [ ] means a weight % of each element.

As described above, because the hot-rolled steel sheet for the tube of the vacuum tube train according to an embodiment of the present disclosure satisfies Relational Expressions 1 and 2, the desired yield strength, vibration damping ratio, and low temperature toughness of the welded portion may be simultaneously secured.

As mentioned earlier, the vacuum tube train tube requires design thickness and strength for the structural stability. Therefore, in the present disclosure, because it was determined that tube design is easy only when the yield strength is equal to or greater than 355MPa, a material having a value of Relational Expression 1 equal to or greater than 355 was developed. In addition, a steel material with the vibration damping ratio predicted in Relational Expression 2 equal to or greater than 150 was developed. Small trains called the pods move inside the vacuum tube train tube at the two-minute intervals. In this regard, when the vibration is not rapidly dampened, there is a risk of destruction caused by the resonance. Accordingly, as shown in Relational Expression 2, when the vibration damping ratio is secured to be equal to or greater than $150 \times 10^{-6}$, such a risk of destruction is significantly reduced.

In addition, the hot-rolled steel sheet for the tube of the vacuum tube train according to an embodiment of the present disclosure may have the yield strength equal to or greater than 350MPa and the Charpy impact energy equal to or greater than 50J at -20°C. More specifically, the hot-rolled steel sheet for the tube of the vacuum tube train according to an embodiment of the present disclosure may have the yield strength of 350 to 500MPa and the Charpy impact energy of 50 to 200J at -20°C.

Therefore, the hot-rolled steel sheet for the tube of the vacuum tube train according to an embodiment of the present disclosure may secure the structural safety of the tube of the vacuum tube train by securing the strength and the low temperature toughness suitable as the structural material.

The hot-rolled steel sheet for the tube of the vacuum tube train according to an embodiment of the present disclosure may have the vibration damping ratio equal to or greater than $150 \times 10^{-6}$. Here, the vibration damping ratio refers to a vibration damping ratio measured for the frequency of 1,650Hz after hit in the flexural vibration mode for a specimen having a length, a width, and a thickness of 80mm×20mm×2mm.

The hot-rolled steel sheet for the tube of the vacuum tube train according to an embodiment of the present disclosure has the vibration damping ratio equal to or greater than $150 \times 10^{-6}$, thereby effectively suppressing the vibration amplification in the vacuum tube and effectively preventing the damage to the tube of the vacuum tube train caused by the vibration.

When the hot-rolled steel sheet according to the present disclosure is welded using the submerged arc welding, the Charpy impact energy at -20°C of the welded portion may be equal to or greater than 50J, and the fraction of the M-A phases (the martensite-austenite composites) included in the welded portion may be equal to or smaller than 5% in the area percentage. Preferably, the M-A phase fraction of the welded portion may be equal to or smaller than 3% in the area percentage, and a more preferable M-A phase fraction of the welded portion may be equal to or smaller than 1% in an area ratio.

Here, the welded portion, as a location 1mm away from a fusion line, may be interpreted as a meaning including both a weld metal portion and a heat-affected zone (HAZ).

In the present disclosure, a welding material used for the welding is not particularly limited, but it is preferable to perform the welding using the welding material that does not include silicon (Si) as much as possible. This is because when the welding is performed using a welding material including silicon (Si), there is a possibility that a large amount of hard M-A phases are formed in the welded portion because of excessive curing ability.

Accordingly, the present disclosure may provide the hot-rolled steel sheet having the physical properties suitable for the tube of the vacuum tube train by having the excellent yield strength, vibration damping ratio, and low temperature toughness of the welded portion.


**Method for manufacturing hot-rolled** steel sheet **for tube of vacuum tube train**

Hereinafter, the method for manufacturing the hot-rolled steel sheet for the tube of the vacuum tube train according to an embodiment of the present disclosure will be described.

The method for manufacturing the hot-rolled steel sheet for the tube of the vacuum tube train according to an embodiment of the present disclosure includes a reheating step, a hot rolling step, and a cooling and coiling step.


Reheating

In the reheating step, a steel slab including, in wt%, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities is reheated at 1,100°C to 1,300°C.

In this step, the steel slab may be heated in a temperature range equal to or higher than 1,100°C in consideration of a rolling load during the hot rolling. In particular, because the present disclosure intends to introduce a microstructure of a certain size or greater, a preferred steel slab heating temperature may be equal to or higher than 1,200°C, and a more preferred steel slab heating temperature may be equal to or higher than 1,250°C. On the other hand, when the steel slab heating temperature is excessively high in excess of 1,300°C, there may be a concern about the decrease in the surface quality resulted from the scale generation.

Hot rolling

In the hot rolling step, the reheated steel slab is hot-rolled at a finishing delivery temperature of 860°C to 960°C.

In the present disclosure, the steel sheet provided by the hot rolling may have a thickness equal to or greater than 10 mm.

During the hot rolling, the crystal grains are deformed as the steel slab is rolled, but soon undergo recrystallization. With this process, coarse and non-uniform structures are refined and homogenized. An important process variable during the hot rolling is the finishing delivery temperature (FDT), which is a temperature at a time the rolling is finished. This is because a particle size and the like of the final microstructure may be controlled based on the finishing delivery temperature. In the present disclosure, because the final microstructure is to be controlled at a level of a certain size or greater, it is preferable to perform the hot rolling at the finishing delivery temperature equal to or higher than 860°C, and a more preferable finishing delivery temperature may be equal to or higher than 900°C. On the other hand, when the finishing delivery temperature is excessively high in excess of 960°C, the final microstructure may be excessively coarse, which is not preferable.

Cooling and coiling

In the cooling and coiling step, the hot-rolled steel sheet that has undergone the hot rolling is cooled to 600 to 700°C and coiled.

As such, the hot-rolled steel sheet that has undergone the hot rolling may be coiled at a coiling temperature of 600°C to 700°C after water cooling. Because the present disclosure intends to implement the composite structure including ferrite and perlite as the final microstructure, it is preferable to perform the coiling in a temperature range equal to or higher than 600°C. Because the present disclosure intends to implement the final microstructure of the predetermined size or greater, it is more preferable to perform the coiling in a temperature range equal to or higher than 630°C. However, when the coiling temperature is excessively high in excess of 700°C, the coarse microstructures may be formed or the surface quality may be deteriorated.

The hot-rolled steel sheet manufactured by the above-described manufacturing method according to an embodiment of the present disclosure may satisfy following Relational Expressions 1 and 2.

$$355 \leq (11+394 \times D^{-0.5})+(448 \times [C])+(94 \times [Si])+(36.5 \times [Co])+(69 \times [Mn])+(3,429 \times [Nb]) \qquad \text{[Relational Expression 1]}$$

$$150 \leq (186-210 \times D^{-0.5})-(121 \times [C])+(13.2 \times [Si])+(31.1 \times [Co])-(13.7 \times [Mn])-(4,723 \times [Nb]) \qquad \text{[Relational Expression 2]}$$

In Relational Expressions 1 and 2 above, D means the average crystal grain size of ferrite of the hot-rolled steel sheet, and [ ] means a weight % of each element.

As described above, because the hot-rolled steel sheet manufactured by the manufacturing method according to an embodiment of the present disclosure satisfies Relational Expressions 1 and 2, the desired yield strength, vibration damping ratio, and low temperature toughness of the welded portion may be simultaneously secured.

Accordingly, the hot-rolled steel sheet manufactured by the manufacturing method according to an embodiment of the present disclosure not only has the yield strength equal to or greater than 350MPa and the Charpy impact energy equal to or greater than 50J at -20°C, but also has the vibration damping ratio equal to or greater than $150 \times 10^{-6}$ measured for the frequency of 1,650Hz in the flexural vibration mode by preparing the specimen having the length, the width, and the thickness of $80 \times 20 \times 2$mm.

In addition, when the hot-rolled steel sheet is welded via the submerged arc welding, the hot-rolled steel sheet manufactured by the manufacturing method according to an embodiment of the present disclosure has the Charpy impact energy equal to or greater tan 50J at -20°C of the welded portion, and has the fraction of the M-A phases included in the welded portion equal to or smaller than 5% in the area percentage. Here, the welded portion may mean the location 1mm away from the fusion line.

As a result, the hot-rolled steel sheet manufactured by the manufacturing method according to an embodiment of the present disclosure has the excellent yield strength, vibration damping ratio, weldability, and low temperature toughness of the welded portion, and thus has the physical properties suitable for the use in the tube of the vacuum tube train.

**Present Examples**

Hereinafter, a composition and an operation of the present disclosure will be described in more detail with preferred Present Examples of the present disclosure. However, these are presented as preferred examples of the present disclosure, and it is not able to be interpreted that the present disclosure is limited thereby in any sense.

Contents not described herein may be sufficiently technically inferred by those skilled in the present technical field, and thus a description thereof will be omitted.

## 1. Manufacture of specimens

Steel slabs having a thickness of 250mm respectively with alloy compositions of A to F described in Table 1 below were prepared, and then hot-rolled steel sheets were manufactured by applying process conditions described in Table 2 below. In Table 1, the remainder is iron (Fe) and other inevitable impurities, and hot-rolled steel sheets (specimen No. 1~15) having a thickness of 2.0mm to which the process conditions of Table 2 are applied were manufactured. Alloy components not shown in Table 1 below refer to the impurities and the remaining Fe.

[Table 1] (Unit: wt%)

| Alloy | C | Si | Co | Mn | Nb |
|-------|------|-----|-----|-----|-------|
| A | 0.07 | 0.5 | 2 | 1.8 | 0 |
| B | 0.02 | 0.5 | 2 | 1.8 | 0 |
| C | 0.2 | 0.5 | 2 | 1.8 | 0 |
| D | 0.07 | 1.5 | 2 | 1.8 | 0 |
| E | 0.07 | 0.5 | 0.5 | 1.8 | 0 |
| F | 0.07 | 0.5 | 2 | 1 | 0 |
| G | 0.07 | 0.5 | 2 | 1.8 | 0.015 |
| H | 0.04 | 0.8 | 1.5 | 1.5 | 0 |
| I | 0.05 | 1.0 | 2.5 | 1.3 | 0 |
| J | 0.08 | 0.8 | 1.8 | 2.0 | 0 |
| K | 0.1 | 0.7 | 2.7 | 2.1 | 0 |

[Table 2]

| Specimen No. | Steel type | FDT (°C) | CT (°C) | Ferrite average crystal grain size ($\mu$m) | Relational Expression 1 | Relational Expression 2 |
|--------------|------------|----------|---------|----------------------------------------------|-------------------------|-------------------------|
| 1 | A | 910 | 670 | 10.0 | 411 | *155* |
| 2 | B | 910 | 670 | 17.0 | 360 | 177 |
| 3 | C | 910 | 670 | 6.0 | 506 | 120 |
| 4 | D | 910 | 670 | 8.8 | 513 | 164 |
| 5 | E | 910 | 670 | 9.1 | 362 | 105 |
| 6 | F | 910 | 670 | 11.1 | 350 | 170 |
| 7 | G | 910 | 670 | 11.0 | 457 | 88 |
| 8 | A | 970 | 710 | 16.0 | 385 | 169 |
| 9 | A | 840 | 600 | 4.0 | 484 | 117 |
| 10 | H | 910 | 650 | 10.5 | 384 | 153 |
| 11 | I | 940 | 640 | 13.5 | 416 | 196 |
| 12 | J | 930 | 610 | 12.2 | 439 | *155* |
| 13 | K | 880 | 630 | 7.4 | 510 | 161 |
| 14 | H | 920 | 670 | 13 | 372 | 160 |
| 15 | K | 930 | 680 | 10.8 | 485 | 174 |

## 2. Evaluation of physical properties

Table 3 shows results of physical property evaluation for Specimen 1 to 15.

1) Analysis of microstructure and mechanical properties

A microstructure and mechanical properties of each specimen were analyzed and listed in Tables 2 and 3. The microstructure was measured using a 500-magnification optical microscope after etching each specimen by a Nital etching method. An ASTM# of ferrite was measured according to ASTM E112.

2) Measurement of vibration damping ratio

The vibration damping ratio was measured at a room temperature using IMCE's RFDA LTV800 after preparing a specimen having a length, a width, and a thickness of 80mm×20mm×2mm. After hit in the flexural vibration mode, a vibration damping ratio of a 1,650Hz region corresponding to a 1st mode among vibration modes of the corresponding specimen was measured and analyzed, and results are listed together in Table 3.

3) Evaluation of weldability and low temperature toughness of welded portion

The submerged arc welding was performed on each specimen using a welding material including C: 0.052wt%, Mn: 1.53wt%, Ni: 1.3wt%, Mo: 0.135wt%, and remaining Fe and other inevitable impurities.
During the submerged arc welding, an input heat amount of $20kJ/cm^2$ was applied to an inside, and an input heat amount of $22kJ/cm^2$ was applied to an outside. A Charpy impact toughness at -20°C of the welded portion was measured according to KS B 0810, and results are shown in Table 3.

[Table 3]

| Specimen No. | Yield strength (MPa) | Welded portion impact toughness ($Jcm^{-2}$) | Damping Ratio ($\times 10^{-6}$) |
|---|---|---|---|
| 1 | 409 | 132 | 160 |
| 2 | 348 | 52 | 180 |
| 3 | 490 | 66 | 112 |
| 4 | 521 | 35 | 172 |
| 5 | 361 | 102 | 99 |
| 6 | 330 | 99 | 171 |
| 7 | 430 | 60 | 66 |
| 8 | 370 | 15 | 202 |
| 9 | 485 | 160 | 109 |
| 10 | 370 | 144 | 151 |
| 11 | 422 | 88 | 201 |
| 12 | 399 | *155* | 160 |
| 13 | 480 | 77 | 163 |
| 14 | 360 | 94 | 154 |
| 15 | 477 | 101 | 190 |

As shown in Tables 1 to 3, it may be identified that Specimen 1 and Specimen 10 to 15 satisfying the alloy composition, the process conditions, and Relational Expressions 1 and 2 of the present disclosure satisfy the yield strength equal to or greater than 350MPa and the vibration damping ratio equal to or greater than $150\times10^{-6}$, as well as satisfy the Charpy impact energy equal to or greater than 50J at -20°C of the welded portion.
On the other hand, it may be identified that Specimen 2 to 9, which do not satisfy one or more of the alloy composition, the process conditions, and Relational Expressions 1 and 2 of the present disclosure, do not simultaneously secure the desired physical properties. In particular, regarding Relational Expressions 1 and 2, in a case of Specimen 6, which does not satisfy Relational Expression 1, the yield strength is smaller than 350MPa. In addition, in a case of 3, 5, 7, and 9, which do not satisfy Relational Expression 2, the vibration damping ratios are smaller than $150\times10^{-6}$. In addition, in a case of Specimen 7 to which niobium (Nb) was added, the vibration damping ratio is significantly lower than those of other specimens.

For comparison with an existing material, EN-S355, which is an existing structural steel material, was tested under the same conditions. It may be identified that, in the case of EN-S355, the vibration damping ratio measured under the same conditions is only $60\times10^{-6}$.

As may be seen from the above experimental results, Specimen 1 satisfying the alloy composition, the process conditions, and Relational Expressions 1 and 2 of the present disclosure has the excellent yield strength, vibration damping ratio, and low temperature toughness of the welded portion, and thus has proven to have the suitable physical properties for the use in the tube of the vacuum tube train.

Although the embodiments of the present disclosure have been mainly described above, various changes or modifications may be applied at the level of those skilled in the art to which the present disclosure belongs. Such changes and modifications may be said to belong to the present disclosure unless they deviate from the scope of the technical idea provided by the present disclosure. Therefore, the scope of the present disclosure should be determined by the following claims.

## Claims

1. A hot-rolled steel sheet for a tube of a vacuum tube train, the hot-rolled steel sheet comprising, in wt%, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities,

   wherein a final microstructure has a composite structure including ferrite and perlite,
   wherein the hot-rolled steel sheet satisfies following Relational Expressions 1 and 2:

   [Relational Expression 1]

   $$355\leq(11+394\times D^{-0.5})+(448\times[C])+(94\times[Si])+(36.5\times[Co])+(69\times[Mn])+(3,429\times[Nb])$$

   [Relational Expression 2]

   $$150\leq(186-210\times D^{-0.5})-(121\times[C])+(13.2\times[Si])+(31.1\times[Co])-(13.7\times[Mn])-(4,723\times[Nb])$$

   (wherein in the Relational Expressions 1 and 2, D denotes an average crystal grain size of ferrite of the hot-rolled steel sheet, and [ ] denotes weight % of each element).

2. The hot-rolled steel sheet of claim 1, wherein the hot-rolled steel sheet has the final microstructure composed of 60 to 95% ferrite, 5 to 40% perlite, and other inevitable structures.

3. The hot-rolled steel sheet of claim 2, wherein said other inevitable structures include a low temperature structure of at least one of bainite and martensite, and the low temperature structure has an area percentage equal to or smaller than 5%.

4. The hot-rolled steel sheet of claim 1, wherein the average crystal grain size of the ferrite is 7 to 15$\mu$m.

5. The hot-rolled steel sheet of claim 1, wherein the hot-rolled steel sheet has a yield strength (YS) equal to or greater than 350MPa and a Charpy impact energy equal to or greater than 50J at -20°C.

6. The hot-rolled steel sheet of claim 1, wherein the hot-rolled steel sheet has a vibration damping ratio equal to or greater than $150\times10^{-6}$ measured for a frequency of 1,650Hz in a flexural vibration mode.

7. The hot-rolled steel sheet of claim 1, wherein in a welded portion formed by welding the hot-rolled steel sheet by submerged arc welding, a Charpy impact energy at -20°C of the welded portion is equal to or greater than 50J and a fraction of M-A phases included in the welded portion is equal to or smaller than 5% in an area percentage.

8. The hot-rolled steel sheet of claim 1, wherein a thickness of the hot-rolled steel sheet is equal to or greater than 10mm.

9. A method for manufacturing a hot-rolled steel sheet for a tube of a vacuum tube train, the method comprising:

reheating a steel slab including, in wt%, carbon (C): 0.03 to 0.11%, silicon (Si): 0.3 to 1.5%, cobalt (Co): 1 to 3%, manganese (Mn): 1.2 to 2.2%, and remaining Fe and other inevitable impurities at 1,100°C to 1,300°C;
hot-rolling the reheated steel slab; and
cooling the hot-rolled steel sheet that has undergone the hot rolling to 600 to 700°C and coiling the cooled steel sheet,
wherein a final microstructure of the hot-rolled steel sheet has a composite structure including ferrite and perlite,
wherein the hot-rolled steel sheet satisfies following Relational Expressions 1 and 2:

[Relational Expression 1]

$$355 \leq (11 + 394 \times D^{-0.5}) + (448 \times [C]) + (94 \times [Si]) + (36.5 \times [Co]) + (69 \times [Mn]) + (3,429 \times [Nb])$$

[Relational Expression 2]

$$150 \leq (186 - 210 \times D^{-0.5}) - (121 \times [C]) + (13.2 \times [Si]) + (31.1 \times [Co]) - (13.7 \times [Mn]) - (4,723 \times [Nb])$$

(wherein in the Relational Expressions 1 and 2, D denotes an average crystal grain size of ferrite of the hot-rolled steel sheet, and [ ] denotes weight % of each element).

10. The method of claim 9, wherein the hot rolling is performed at a finishing delivery temperature of 860°C to 960°C.

11. The method of claim 9, wherein the hot-rolled steel sheet has the final microstructure composed of 60 to 95% ferrite, 5 to 40% perlite, and other inevitable structures.

12. The method of claim 11, wherein said other inevitable structures include a low temperature structure of at least one of bainite and martensite, and the low temperature structure has an area percentage equal to or smaller than 5%.

13. The method of claim 9, wherein the average crystal grain size of the ferrite is 7 to 15$\mu$m.

14. The method of claim 9, wherein the hot-rolled steel sheet has a yield strength (YS) equal to or greater than 350MPa and a Charpy impact energy equal to or greater than 50J at -20°C.

15. The method of claim 9, wherein the hot-rolled steel sheet has a vibration damping ratio equal to or greater than $150 \times 10^{-6}$ measured for a frequency of 1,650Hz in a flexural vibration mode.

16. The method of claim 9, wherein in a welded portion formed by welding the hot-rolled steel sheet by submerged arc welding, a Charpy impact energy at -20°C of the welded portion is equal to or greater than 50J and a fraction of M-A phases included in the welded portion is equal to or smaller than 5% in an area percentage.

17. The method of claim 9, wherein a thickness of the hot-rolled steel sheet is equal to or greater than 10mm.

## INTERNATIONAL SEARCH REPORT

International application No.

**PCT/KR2023/019804**

| A. | CLASSIFICATION OF SUBJECT MATTER |
|---|---|

**C22C 38/10**(2006.01)i; **C22C 38/04**(2006.01)i; **C22C 38/02**(2006.01)i; **C21D 8/02**(2006.01)i; **B21C 47/02**(2006.01)i; **C21D 9/46**(2006.01)i; **B23K 9/29**(2006.01)i

According to International Patent Classification (IPC) or to both national classification and IPC

| B. | FIELDS SEARCHED |
|---|---|

Minimum documentation searched (classification system followed by classification symbols)

C22C 38/10(2006.01); C21D 8/02(2006.01); C21D 9/46(2006.01); C22C 38/00(2006.01); C22C 38/02(2006.01); C22C 38/06(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel sheet), 코발트(cobalt), 페라이트(ferrite), 펄라이트 (pearlite), 하이퍼 튜브 열차(hyper tube train), 결정립(grain)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-081367 A (KOBE STEEL LTD.) 27 April 2015 (2015-04-27)<br>See paragraphs [0001], [0032]-[0033], [0051], [0055], [0063], [0084], [0086] and [0090] and claims 1 and 3-4. | 1-17 |
| A | KR 10-2014-0044931 A (JFE STEEL CORPORATION) 15 April 2014 (2014-04-15)<br>See paragraphs [0082]-[0090] and claim 1. | 1-17 |
| A | KR 10-2022-0082282 A (POSCO) 17 June 2022 (2022-06-17)<br>See paragraph [0093] and claims 1-3. | 1-17 |
| A | JP 2021-031701 A (NIPPON STEEL CORP.) 01 March 2021 (2021-03-01)<br>See paragraph [0037] and claims 1 and 4. | 1-17 |
| A | WO 2017-169871 A1 (JFE STEEL CORPORATION) 05 October 2017 (2017-10-05)<br>See claims 1, 3 and 6. | 1-17 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **21 March 2024** | **22 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/019804**

| Patent document cited in search report | | | Publication date (day/month/year) | Patent family member(s) | | | Publication date (day/month/year) |
|---|---|---|---|---|---|---|---|
| JP | 2015-081367 | A | 27 April 2015 | CN | 105658830 | A | 08 June 2016 |
| | | | | CN | 105658830 | B | 11 August 2017 |
| | | | | DE | 112014004834 | T5 | 07 July 2016 |
| | | | | JP | 6143355 | B2 | 07 June 2017 |
| | | | | MX | 2016005086 | A | 03 August 2016 |
| | | | | US | 2016-0265078 | A1 | 15 September 2016 |
| | | | | WO | 2015-060311 | A1 | 30 April 2015 |
| KR | 10-2014-0044931 | A | 15 April 2014 | CN | 103764864 | A | 30 April 2014 |
| | | | | CN | 103764864 | B | 17 August 2016 |
| | | | | EP | 2752500 | A1 | 09 July 2014 |
| | | | | EP | 2752500 | A4 | 19 August 2015 |
| | | | | EP | 2752500 | B1 | 26 October 2016 |
| | | | | JP | 2013-049901 | A | 14 March 2013 |
| | | | | JP | 5397437 | B2 | 22 January 2014 |
| | | | | KR | 10-1600725 | B1 | 07 March 2016 |
| | | | | MX | 2014002021 | A | 27 March 2014 |
| | | | | MX | 340869 | B | 28 July 2016 |
| | | | | TW | 201313918 | A | 01 April 2013 |
| | | | | TW | I470094 | B | 21 January 2015 |
| | | | | US | 11098392 | B2 | 24 August 2021 |
| | | | | US | 2014-0360634 | A1 | 11 December 2014 |
| | | | | US | 2019-0106773 | A1 | 11 April 2019 |
| | | | | WO | 2013-031105 | A1 | 07 March 2013 |
| KR | 10-2022-0082282 | A | 17 June 2022 | CN | 116615569 | A | 18 August 2023 |
| | | | | EP | 4261308 | A1 | 18 October 2023 |
| | | | | JP | 2023-551880 | A | 13 December 2023 |
| | | | | KR | 10-2484995 | B1 | 04 January 2023 |
| | | | | US | 2024-0018618 | A1 | 18 January 2024 |
| | | | | WO | 2022-124704 | A1 | 16 June 2022 |
| JP | 2021-031701 | A | 01 March 2021 | JP | 7303435 | B2 | 05 July 2023 |
| WO | 2017-169871 | A1 | 05 October 2017 | JP | 6278161 | B1 | 14 February 2018 |
| | | | | JP | WO2017-169871 | A1 | 05 April 2018 |
| | | | | MX | 2018011750 | A | 18 February 2019 |
| | | | | US | 11060157 | B2 | 13 July 2021 |
| | | | | US | 2019-0106759 | A1 | 11 April 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090086232